(19) **Europäisches Patentamt / European Patent Office / Office européen des brevets**

(11) **EP 3 080 904 B1**

(12) **EUROPEAN PATENT SPECIFICATION**

(45) Date of publication and mention
of the grant of the patent:
**27.06.2018 Bulletin 2018/26**

(21) Application number: **14798899.2**

(22) Date of filing: **17.11.2014**

(51) Int Cl.:
**H02M 7/483** $^{(2007.01)}$ **H02M 7/487** $^{(2007.01)}$

(86) International application number:
**PCT/EP2014/074751**

(87) International publication number:
**WO 2015/086265 (18.06.2015 Gazette 2015/24)**

(54) **PULSE WIDTH MODULATION WITH FASTER CAPACITOR BALANCING**

IMPULS MIT MODULATION MIT SCHNELLEREM KONDENSATORAUSGLEICH

MODULATION D'IMPULSION AVEC ÉQUILIBRAGE DE CONDENSATEUR PLUS RAPIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.12.2013 EP 13196657**

(43) Date of publication of application:
**19.10.2016 Bulletin 2016/42**

(73) Proprietor: **ABB Schweiz AG
5400 Baden (CH)**

(72) Inventors:
• **VAN-DER-MERWE, Wim
CH-5405 Baden (CH)**
• **AL-HOKAYEM, Peter
CH-5405 Baden (CH)**

(74) Representative: **ABB Patent Attorneys
c/o ABB Schweiz AG
Intellectual Property CH-IP
Brown Boveri Strasse 6
5400 Baden (CH)**

(56) References cited:
**WO-A1-2011/110472    WO-A1-2013/018112**

**Description**

FIELD OF THE INVENTION

The invention relates to the field of power electronics. In particular, the invention relates to a method, a computer program, a computer-readable medium and a controller for controlling an electrical converter. The invention relates also to an electrical converter.

BACKGROUND OF THE INVENTION

Electrical converters may be used for interconnecting two electrical grids of different frequency, for supplying a load such as an electrical motor with electrical energy and for converting the electrical energy produced by an electrical energy source (such as an electrical generator) into a voltage to be supplied to a grid or another type of load.

Some types of electrical converters comprise flying capacitors, i.e. capacitors that are not directly connected in parallel to a DC link.

One of the main challenges in multilevel converters with flying capacitors is that one usually needs to maintain the capacitor voltages around a certain desired value with minimal level of ripple, in other words balance the voltages.

Pulse Width Modulation (PWM) schemes offer an inherent mechanism balancing of the voltages among different capacitors in the underlying topology, which may be called natural balancing. However, natural balancing usually is inherently a slow mechanism.

In WO 2011/110472 A1 a generic method for controlling an electrical converter having a balancing property such that a capacitor voltage of a capacitor of the electrical converter tends towards a balancing voltage, whereby phase shifting of a regular carrier signal is used, such that the capacitor voltage of the capacitor tends more directly in the direction of the natural balancing region than during pulse width modulation with the regular carrier signal.

DESCRIPTION OF THE INVENTION

It may be an object of the invention to control an electrical converter such that unbalances in capacitor voltages are neutralized faster.

This object is achieved by the subject-matter of the independent claims. Further exemplary embodiments are evident from the dependent claims and the following description.

An aspect of the invention relates to a method for controlling an electrical converter. The electrical converter may be an inverter or an active rectifier. It may be an indirect or a direct converter. In particular, the converter may be a high power converter adapted for converting currents with more than 100 A and/or 1000 V. In general, the converter may comprise a plurality of semiconductor switches such as IGBTs and/or ICGTs that are switched by a controller.

According to an embodiment of the invention, the electrical converter has a balancing property such that a capacitor voltage of a capacitor of the electrical converter tends towards a balancing voltage and/or such that capacitor voltages of two capacitors of the electrical inverter balances with respect to each other, in particular, when the electrical converter is switched according to a regular pulse width modulation scheme.

According to an embodiment of the invention, the method comprises the steps of: generating switching signals for the electrical converter based on pulse width modulation, wherein switching instants are determined by comparing a reference voltage signal with a carrier signal; determining a state of unbalance of at least one capacitor of the electrical converter, the state of unbalance being based on a difference between an actual capacitor voltage and a desired reference voltage; determining, whether the state of unbalance is outside a natural balancing region; and, in the case, the state of unbalance is outside the natural balancing region, time or phase shifting of a regular carrier signal, such that the capacitor voltage of the capacitor tends more directly in the direction of the natural balancing region than during pulse width modulation with the regular carrier signal.

Summarized, by shifting a carrier signal, the operation of the electrical converter may be changed slightly such that the natural balancing property of the converter moves the capacitor voltages faster in the direction of the regular point of balance than would be the case using natural balancing during regular pulse width modulation. If the state of unbalance (which may be defined as an offset from a natural balancing point or regular point of balance) has reached the natural balancing region again (which may be predefined offline), the converter may be controlled again with regular pulse width modulation, i.e. the carrier signal is shifted back to the regular carrier signal.

It has to be understood that the state of unbalance may be a scalar or may be vector, which may be calculated from capacitor voltages.

In particular for a multilevel converter, the method may achieve optimal voltage balancing by relying on systematically-designed phase shifts in the carrier signal. The method may have superior performance with respect to the traditional, regular natural balancing mechanisms, i.e., a drastically accelerated convergence rate towards a balanced state.

Furthermore, a phase shift for the phase shifting of the regular carrier signal is determined by minimizing a cost function based on the state of unbalance and/or a DC link voltage of the electrical converter. For example, the cost function may be minimized in an optimization problem, which may comprise the physical properties of the electrical converter as (mathematical) constraints. This has the advantageous effect that the phase shifts are chosen as to move the state of unbalance on the shortest possible route towards natural balancing region.

According to an embodiment of the invention, the phase shift of the carrier signal is calculated online. The above mentioned minimization problem may be solved online or offline and stored in a lookup table.

According to an embodiment of the invention, the phase shift is determined from a table of offline calculated phase shifts. On the other hand, a specific set of input parameters to the optimization (minimization) problem (such as the actual state of unbalance) may be solved offline (i.e. before the converter is operating) and stored in a table together with the corresponding solution (for example, an optimal phase shift). During operation, the optimal phase shift may then be read from the table.

According to an embodiment of the invention, a region outside the natural balancing region is portioned into a grid associated with offline calculated phase shifts. For example, during operation of the converter, a grid point next to the currently determined state of unbalance may be used for reading a phase shift from the table.

For example, the state of unbalance may be computed online form measured values and may be mapped to a close by grid point. The phase shift for this grid point may have been computed offline (based on an optimization problem that is solved offline). The stored phase shift is the applied.

According to an embodiment of the invention, the electrical converter comprises at least two capacitors. Usually, the electrical converter may comprise more than one flying capacitor. In this case, the state of unbalance may be a vector, which is based on at least two voltages of the at least two capacitors. In particular, the unbalance region is a two or more-dimensional region, which may have a specific shape (for example a circular, elliptical, spherical or ellipsoidal shape).

According to an embodiment of the invention, the balancing voltage is smaller than a DC link voltage of the electrical converter. For example, the balancing voltage is less than 50% of the DC link voltage.

According to an embodiment of the invention, switching instants are determined by comparing a reference voltage signal with at least two carrier signals for at least two converter cells. In the case of a modular converter, the converter may comprise two or more converter cells, each of which may be associated with a (for example flying) capacitor. A carrier signal may be provided for each converter cell.

According to an embodiment of the invention, regular carrier signals are equally spaced from each other. For example, two regular carrier signals may be shifted with respect to each other by 180° or three carrier signals by 120°.

A further aspect of the invention relates to a computer program, which, when being executed on a processor, is adapted for executing the steps of the method as described in the above and in the following, and to a computer-readable medium on which such a computer program is stored. A computer-readable medium may be a floppy disk, a hard disk, an USB (Universal Serial Bus) storage device, a RAM (Random Access Memory), a ROM (Read Only Memory) and an EPROM (Erasable Programmable Read Only Memory). A computer-readable medium may also be a data communication network, e.g. the Internet, which allows downloading a program code.

A further aspect of the invention relates to a controller for controlling an electrical converter adapted for executing the steps of the method as described in the above and in the following. For example, the control method may be implemented on any computational hardware including DSPs, FPGAs, microcontroller, CPUs, GPUs, multi-core platforms, and combinations thereof. In particular, the controller may comprise a memory in which the above-mentioned computer program is stored and may comprise a processor for executing the computer program.

A further aspect of the invention relates to an electrical converter, in particular to an electrical converter that has a balancing property such that a capacitor voltage of the capacitor of the electrical converters tends towards a balancing voltage, when the semiconductor switches are switched based on a regular pulse width modulation scheme.

According to an embodiment of the invention, the electrical converter comprises a plurality of semiconductor switches, at least one capacitor and a controller as described above and in the following adapted for controlling the semiconductor switches. Usually, the electrical converter may comprise more than one flying capacitor.

According to an embodiment of the invention, the capacitor is connected to a connection point between two series connected semiconductor switches. This may distinguish the capacitor to be balanced from a conventional single DC link capacitor.

According to an embodiment of the invention, the electrical converter further comprises at least two converter cells connected in series, wherein the capacitor is connected to a connection point between the at least two converter cells. In other words, the capacitor may be a flying capacitor.

According to an embodiment of the invention, the electrical converter may be a (modular) multi-level converter, a capacitor clamped (flying capacitor or imbrecated cell) converter, a cascaded bridge converter and/or a diode clamped converter.

For example, a modular multi-level converter (MMC), which may comprise a capacitor in each converter cell, usually exhibit a self balancing mechanism that may be used as natural self balancing property used by the control method.

As a further example, a cascaded bridge converter, which may comprise at least two converter cells nested into each other, usually has natural balancing properties. The cascaded connection does provide the electrical converter with a balancing mechanism. The method may also be applicable to the cascaded bridge with passive rectifier source.

It has to be understood that features of the method as described in the above and in the following may be features of the computer program, the computer-readable medium, the controller and/or the electrical converter as described in the above and in the following.

These and other aspects of the invention will be apparent from and elucidated with reference to the embodiments described hereinafter.

BRIEF DESCRIPTION OF THE DRAWINGS

The subject-matter of the invention will be explained in more detail in the following text with reference to exemplary embodiments which are illustrated in the attached drawings.

Fig. 1 schematically shows an electrical converter according to an embodiment of the invention.

Fig. 2 shows an embodiment of a circuit diagram for the electrical converter of Fig. 1.

Fig. 3 shows a further embodiment of a circuit diagram for the electrical converter of Fig. 1.

Fig. 4 shows a further embodiment of a circuit diagram for the electrical converter of Fig. 1.

Fig. 5 shows a flow diagram for a method for controlling an electrical converter according to an embodiment of the invention.

Fig. 6 shows a diagram with shifted carrier signals according to an embodiment of the invention.

Fig. 7 shows a diagram indicating regions for a state of unbalance used in the method of claim 5.

Fig. 8 shows a diagram with optimal movement direction used in the method of Fig. 5.

Fig. 9A and 9B show diagrams with voltages, when the converter of Fig. 1 is operated with regular pulse width modulation.

Fig. 10A and 10B show diagrams with voltages, when the converter of Fig. 1 is operated with the method of Fig. 5.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

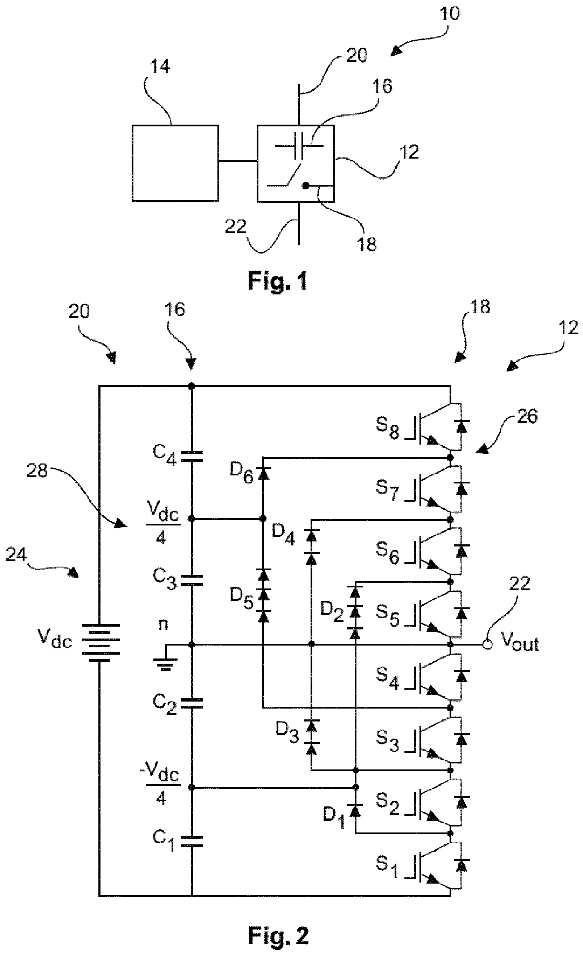

Fig. 1 shows an electrical converter 10 comprising a (high power) converter circuit 12 and a controller 14. The converter is adapted to control the converter circuit 12 by using a natural balancing property of the converter circuit 12 as will be explained in the following.

In general, the converter circuit 12 comprises a capacitor 16, which voltage is to be balanced by the method and semiconductor switches 18 that are switched in such a way that the capacitor 16 balances, while the converter 10 converts an input current at an input 20 into an output current at the output 22.

Fig. 2 to 4 show circuit diagrams for different converter circuits 12 that all may employ a natural balancing property.

Fig. 2 shows a converter circuit 12 of a 5-level diode clamped converter. The converter circuit 12 comprises eight switches $S_1$ to $S_8$ connected in series between the input terminals 20 connected to a DC link 24. The inner two switches $S_4$, $S_5$ provide a phase output 22. Four DC link capacitors $C_1$ to $C_4$ are connected in parallel to the terminals 20 and the series connected switches $S_1$ to $S_8$. Connection points 26 between two switches are connected via diodes $D_1$ to $D_6$ to connection points 28 between two capacitors $C_1$ to $C_4$.

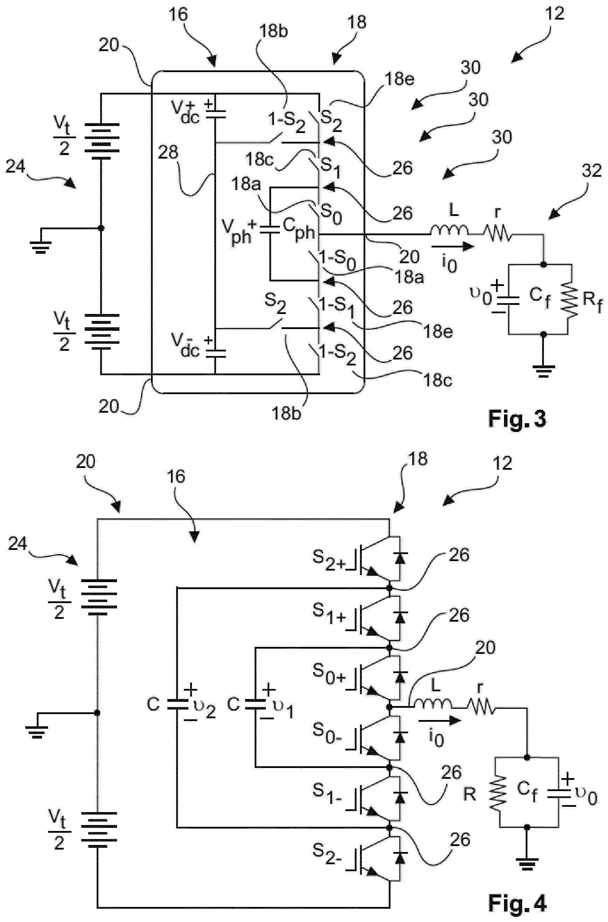

Fig. 3 shows the converter circuit 12 of a 5-level neutral point clamped converter (5L-ANPC). The converter circuit 12 comprises six switches connected in series between the input terminals 20 connected to a DC link 24. The inner two switches 18a provide a phase output 22. Two DC link capacitors are connected in parallel to the terminals 20 and the series connected switches. Two further switches 18b are connected between a connection point 26 between two outer series connected switches 18c and the connection point 28 between the two DC link capacitors. A flying capacitor $C_{ph}$ is connected to a connection point 26 between one inner switch 18a and an outer switch 18c of the series connected switches.

The inner switches 18a may be seen as an inner converter cell 30. The outer switches 18c may be seen as providing two further converter cells 30.

Fig. 3 also shows a replacement circuit for a load 32 at the output 20 of the converter 10.

Fig. 4 shows a converter circuit 12 of a three-cell flying capacitor converter. The converter circuit 12 comprises six switches $S_{0-}$, $S_{0+}$, $S_{1-}$, $S_{1+}$, $S_{2-}$, $S_{2+}$ connected in series between the input terminals 20 connected to a DC link 24. The inner two switches $S_{0-}$, $S_{0+}$ provide a phase output 22 between them. The switches may be associated with three nested converter cells $S_0$ (switches $S_{0-}$, $S_{0+}$), $S_1$ (switches $S_{1-}$, $S_{1+}$), and $S_2$ (switches $S_{2-}$, $S_{2+}$). A first inner flying capacitor C is connected to connection points 26 between the inner cell $S_0$ and the middle cell $S_1$. A second outer flying capacitor C is connected to connection points 26 between the middle cell $S_1$ and the outer cell $S_2$.

As an example, an optimal balancing in a multilevel converter 10 through carrier phase shift modulation will be explained using the three-cell flying capacitor converter of Fig. 4 as basis. However, the method is also applicable to other electrical converters having a natural balancing property.

With respect to Fig. 4, to analyse the behaviour of the circuit 12, the switching functions $s_0(t)$, $s_1(t)$ and $s_2(t)$ are defined as:

$$s_0(t) = \begin{cases} 1 & \text{if } S_0 + \text{is closed} \\ -1 & \text{if } S_0 - \text{is closed} \end{cases}$$

$$s_1(t) = \begin{cases} 1 & \text{if } S_1 + \text{is closed} \\ -1 & \text{if } S_1 - \text{is closed} \end{cases}$$

$$s_2(t) = \begin{cases} 1 & \text{if } S_2 + \text{is closed} \\ -1 & \text{if } S_2 - \text{is closed} \end{cases} \tag{1}$$

From the circuit 12 of Fig. 4, the system of differential equations describing the circuit operation can be found as

$$\frac{d}{dt}\begin{bmatrix} 2C \cdot v_1 \\ 2C \cdot v_2 \\ L \cdot i_0 \\ C_f \cdot v_0 \end{bmatrix} = \begin{bmatrix} 0 & 0 & s_1 - s_0 & 0 \\ 0 & 0 & s_2 - s_1 & 0 \\ \frac{1}{2}(s_0 - s_1) & \frac{1}{2}(s_1 - s_2) & -r & -1 \\ 0 & 0 & 1 & \frac{-1}{R} \end{bmatrix}\begin{bmatrix} v_1 \\ v_2 \\ i_0 \\ v_0 \end{bmatrix} + \begin{bmatrix} 0 \\ 0 \\ s_2 \\ 0 \end{bmatrix}\frac{V_t}{2} \tag{2}$$

The unbalance in the circuit 12 can be identified if a linear transformation from the cell voltages to a set of total and difference parameters is made. The following difference and total parameters are defined:

$$s_t = \frac{1}{2}(s_1 + s_2 + s_3)$$

$$s_{d1} = \frac{1}{2}(s_1 - s_0)$$

$$s_{d2} = \frac{1}{2}(s_2 - s_1)$$

$$v_{d1} = \frac{V_t}{3} - v_1$$

$$v_{d2} = \frac{2V_t}{3} - v_2$$

The system of differential equations can be rewritten in terms of the defined d and t parameters as

$$\frac{d}{dt}\begin{bmatrix} C \cdot v_{d1} \\ C \cdot v_{d2} \\ L \cdot i_0 \\ C_f \cdot v_0 \end{bmatrix} = \begin{bmatrix} 0 & 0 & -s_{d1} & 0 \\ 0 & 0 & -s_{d2} & 0 \\ s_{d1} & s_{d2} & -r & -1 \\ 0 & 0 & 1 & \frac{-1}{R} \end{bmatrix}\begin{bmatrix} v_1 \\ v_2 \\ i_0 \\ v_0 \end{bmatrix} + \begin{bmatrix} 0 \\ 0 \\ s_t \\ 0 \end{bmatrix}\frac{V_t}{3}. \quad (3)$$

In the following, the assumption is made that the converter 10 is operating with a constant duty cycle. This approach will greatly simplify the description of the switching functions in the frequency domain. However, this assumption does not exclude the use of this method with modulated duty cycle. With the use of modulated duty-cycles, the description of the switching functions does, however, become more involved as a double Fourier series must be used.

The switching functions can be described in the frequency domain using the exponential Fourier series coefficients as

$$C_{0(n)} = \Psi(n)\zeta_n(\theta_0) \quad (4)$$

$$C_{1(n)} = \Psi(n)e^{-j2\pi n\frac{1}{3}} = \Psi(n)\zeta_n(\theta_1) \quad (5)$$

$$C_{2(n)} = \Psi(n)e^{-j2\pi n\frac{2}{3}} = \Psi(n)\zeta_n(\theta_2) \quad (6)$$

$$\Psi(n) = \begin{cases} \frac{2}{\pi n}\sin(\pi n d) & \text{for } n \neq 0 \\ 2d - 1 & \text{for } n = 0. \end{cases} \quad (7)$$

The function $\zeta_n(a)$ is defined as $\zeta_n(a) = e^{-j2\pi an}$.

Using the assumptions that the flying capacitor C is large enough so that the switching frequency voltage ripple on $v_1$ and $v_2$ is negligible and that the capacitance is large enough that the capacitor voltage vary slow enough with time that the rest of the converter can be regarded as being in the steady state, the expressions for the averaged flying capacitor currents can be found as:

$$i_{d1} = \frac{V_t}{3}\frac{S_t(\omega)}{Z(\omega}*S_{d1}(\omega)\Big|_{\omega=0} + V_{d1}\frac{S_{d1}(\omega)}{Z(\omega)}*S_{d1}(\omega)\Big|_{\omega=0} + V_{d2}\frac{S_{d2}(\omega)}{Z(\omega)}*S_{d1}(\omega)\Big|_{\omega=0} \quad (8)$$

$$i_{d2} = \frac{V_t}{3}\frac{S_t(\omega)}{Z(\omega)}*S_{d2}(\omega)\Big|_{\omega=0} + V_{d1}\frac{S_{d1}(\omega)}{Z(\omega)}*S_{d2}(\omega)\Big|_{\omega=0} + V_{d2}\frac{S_{d2}(\omega)}{Z(\omega)}*S_{d2}(\omega)\Big|_{\omega=0} \quad (9)$$

Using (3) and the expressions of the currents above, we can rewrite the dynamics of the voltage differences as:

$$\frac{d}{dt}\begin{bmatrix} v_{d1} \\ v_{d2} \end{bmatrix} = -\underbrace{\begin{bmatrix} a_{11}(\theta_0,\theta_1) & a_{12}(\theta_0,\theta_1,\theta_2) \\ a_{21}(\theta_0,\theta_1,\theta_2) & a_{22}(\theta_1,\theta_2) \end{bmatrix}}_{:=A(\theta_0,\theta_1,\theta_2)} \underbrace{\begin{bmatrix} v_{d1} \\ v_{d2} \end{bmatrix}}_{:=v_d} + \underbrace{\begin{bmatrix} B_1(\theta_0,\theta_1,\theta_2) \\ B_2(\theta_0,\theta_1,\theta_2) \end{bmatrix}}_{:=B(\theta_0,\theta_1,\theta_2)} V_t, \qquad (10)$$

where $\theta_i$ is the phase shift in the $i^{th}$ carrier (control variables), and the components of the matrices **A** and **B** are defined as follows:

$$B_1(\theta_0,\theta_1,\theta_2) = \frac{1}{C}\frac{S_t(\omega)}{Z(\omega)} * S_{d1}(\omega)\Bigg|_{\omega=0} = \frac{1}{C}\sum_{\xi=-\infty}^{\infty}\frac{S_{t(\xi)}}{Z(\xi\omega_s)}S_{d1(-\xi)}$$

$$= \frac{1}{C}\sum_{\xi=-\infty}^{\infty}\frac{C_{0(\xi)}+C_{1(\xi)}+C_{2(\xi)}}{4Z(\xi\omega_s)}\left(C_{1(-\xi)}-C_{0(-\xi)}\right)$$

$$= \frac{1}{C}\sum_{\xi=-\infty}^{\infty}\frac{|\Psi(\xi)|^2}{4Z(\xi\omega_s)}\left(\zeta_\xi(\theta_0)+\zeta_\xi(\theta_1)+\zeta_\xi(\theta_2)\right)\left(\zeta_\xi(-\theta_1)-\zeta_\xi(-\theta_0)\right),$$

$$(11)$$

$$B_2(\theta_0,\theta_1,\theta_2) = \frac{1}{C}\frac{S_t(\omega)}{Z(\omega)} * S_{d2}(\omega)\Bigg|_{\omega=0} = \frac{1}{C}\sum_{\xi=-\infty}^{\infty}\frac{S_{t(\xi)}}{Z(\xi\omega_s)}S_{d2(-\xi)}$$

$$= \frac{1}{C}\sum_{\xi=-\infty}^{\infty}\frac{C_{0(\xi)}+C_{1(\xi)}+C_{2(\xi)}}{4Z(\xi\omega_s)}\left(C_{2(-\xi)}-C_{1(-\xi)}\right)$$

$$= \frac{1}{C}\sum_{\xi=-\infty}^{\infty}\frac{|\Psi(\xi)|^2}{4Z(\xi\omega_s)}\left(\zeta_\xi(\theta_0)+\zeta_\xi(\theta_1)+\zeta_\xi(\theta_2)\right)\left(\zeta_\xi(-\theta_2)-\zeta_\xi(-\theta_1)\right),$$

$$(12)$$

$$a_{12}(\theta_0,\theta_1,\theta_2) = \frac{1}{C}\frac{S_t(\omega)}{Z(\omega)} * S_{d2}(\omega)\Bigg|_{\omega=0} = \frac{1}{C}\sum_{\xi=-\infty}^{\infty}\frac{S_{d1(\xi)}}{Z(\xi\omega_s)}S_{d2(-\xi)}$$

$$= \frac{1}{C}\sum_{\xi=-\infty}^{\infty}\frac{C_{1(\xi)}-C_{0(\xi)}}{4Z(\xi\omega_s)}\left(C_{2(-\xi)}-C_{1(-\xi)}\right)$$

$$= \frac{1}{C}\sum_{\xi=-\infty}^{\infty}\frac{|\Psi(\xi)|^2}{4Z(\xi\omega_s)}\left(\zeta_\xi(\theta_1)-\zeta_\xi(\theta_0)\right)\left(\zeta_\xi(-\theta_2)-\zeta_\xi(-\theta_1)\right),$$

$$(13)$$

$$a_{11}(\theta_0,\theta_1) = \frac{1}{C}\frac{S_{d1}(\omega)}{Z(\omega)} * S_{d1}(\omega)\Bigg|_{\omega=0} = \frac{1}{C}\sum_{\xi=-\infty}^{\infty}\frac{|\Psi(\xi)|^2}{4Z(\xi\omega_2)}\left(\zeta_\xi(\theta_1)-\zeta_\xi(\theta_0)\right)\left(\zeta_\xi(-\theta_1)-\zeta_\xi(-\theta_0)\right),$$

$$(14)$$

$$a_{22}(\theta_1, \theta_2) = \frac{1}{C} \frac{S_{d2}(\omega)}{Z(\omega)} * S_{d2}(\omega) \bigg|_{\omega=0} = \frac{1}{C} \sum_{\xi=-\infty}^{\infty} \frac{|\Psi(\xi)|^2}{4Z(\xi\omega_2)} \big(\zeta_\xi(\theta_2) - \zeta_\xi(\theta_1)\big)\big(\zeta_\xi(-\theta_2) - \zeta_\xi(-\theta_1)\big),$$

(15)

$$a_{21}(\theta_0, \theta_1, \theta_2) = \frac{1}{C} \frac{S_{d2}(\omega)}{Z(\omega)} * S_{d1}(\omega) \bigg|_{\omega=0} = \frac{1}{C} \sum_{\xi=-\infty}^{\infty} \frac{|\Psi(\xi)|^2}{4Z(\xi\omega_2)} \big(\zeta_\xi(\theta_1) - \zeta_\xi(\theta_0)\big)\big(\zeta_\xi(-\theta_2) - \zeta_\xi(-\theta_1)\big)$$

(16)

When the carriers are interleaved (i.e. not phase shifted) then

$$B(\theta_0, \theta_1, \theta_2) = 0$$ (17)

and the converter will naturally balance. However, the dynamics associated with the rebalancing after an external perturbation could be slow. This is especially true when the switching frequency is low or the load impedance is high at the switching frequency and above. The balancing mechanism is however stable.

However, when the phase shifts are changed, the vector **B** is no longer zero and the system will naturally tend to a different stability point which could be calculated as

$$v_d^* = -A(\theta_0, \theta_1, \theta_2)^{-1} B(\theta_0, \theta_1, \theta_2) V_t,$$ (18)

whenever the matrix **A** is invertible.

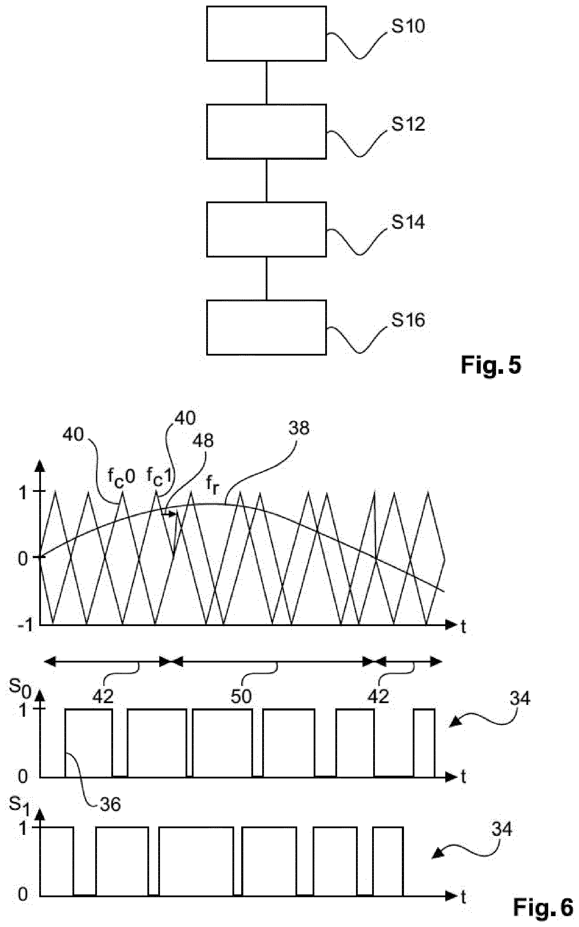

From 18, one can see that the stability point or balancing voltages $v_d^*$ depends on the phase shifts $\theta_0$, $\theta_1$, $\theta_2$ carrier signal, which will be exploited during the control method as described with respect to the following Fig. 5. Comparable equations may be derived for the control circuits of Fig. 2 and Fig. 3. It can be seen that $v_d^* = 0$ when the carriers are interleaved.

Fig. 5 shows a flow diagram for a method for controlling the electrical converter 10.

In step S10, the controller 14 generates switching signals 34 for the electrical converter 10 based on pulse width modulation, wherein switching instants 36 are determined by comparing a reference voltage signal 38 with a carrier signal 40.

For example, Fig. 6 shows an example for pulse width modulation for generation of two switching signals 34, $s_0$, $s_1$ (as would be used for a converter circuit 12 analogous to Fig. 4 but with only two converter cells $S_0$ and $S_1$ and one flying capacitor C).

During the regular, normal operation phase 42, two carrier signals 40, $f_{c0}$, $f_{c1}$ are generated, which are phase shifted with respect to each other by 180°. Whenever one carrier signal 40, $f_{c0}$, $f_{c1}$ intersects the reference signal 38, $f_r$, a switching instant 36 is generated for the respective switching signals 34, $s_0$, $s_1$.

In step S12, the controller 14 determines a state of unbalance $\mathbf{v_d}$ of at least one capacitor 16 of the electrical converter. The state of unbalance may be based on a difference between an actual capacitor voltage and a reference voltage. The reference voltage may be the target voltage, the capacitor reaches or tends to during natural balancing.

The state of unbalance $\mathbf{v_d}$ may be calculated as set out in the equations after equation (2). One or more of the capacitor voltages $v_1$, $v_2$ may be measured, shifted and/or normalized, and composed to a vector that may be seen as the state of unbalance $\mathbf{v_d}$.

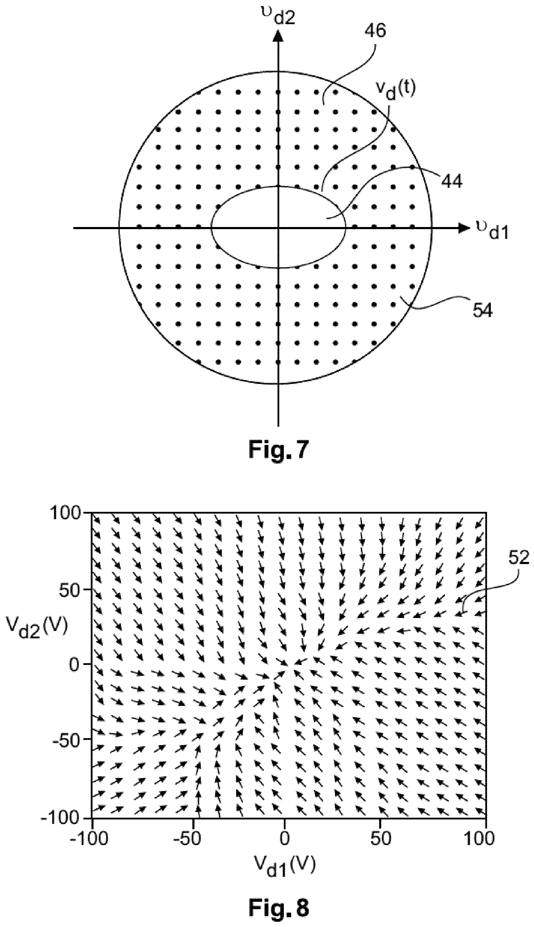

In step S14, the controller 14 determines, whether the state of unbalance is outside a natural balancing region 44, as will be explained with respect to Fig. 7.

Fig. 7 shows a phase diagram for the possible states of a two-dimensional state of unbalance $\mathbf{v_d}$. In the case, the state of unbalance $\mathbf{v_d}$ has other dimensions, the possible states may be one-, three- or more-dimensional. The states may be decomposed into the natural balancing region 44 around the stability point (the origin, when the state of unbalance $\mathbf{v_d}$ has been shifted accordingly). The natural balancing region 44 may be determined offline and may be seen as the region, where the unbalance is small enough, and in which natural balancing may be used.

A limited region 46 outside the natural balancing region 44 may be defined based on the physical limitations of the underlying hardware of the converter 10, for example the maximal possible voltages of the capacitors 16. In the so-called forced balancing region 46, the forced balancing by moving the set point (step S16) will be used.

In step S16, in the case, the state of unbalance $\mathbf{v}_d$ is outside the natural balancing region and in particular inside the forced balancing region, the controller determines a phase shift at least one of the carrier signals 40.

Fig. 6 shows an example for such a phase shift 48. The carrier signal 40, $f_{c1}$ has been shifted forward by about 90° during the forced balancing phase 50. This results in different switching instants 36 compared to the regular carrier signal 40.

The shift 48 of the carrier signal 40 is chosen or calculated, such that the capacitor voltages $v_1$, $v_2$ of the capacitors 16 tends in the direction to the origin of the diagram of Fig. 7. In particular, the path, the voltages $v_1$, $v_2$ are following after the phase shift 48 may be chosen in such a way that the path goes through the origin of the diagram.

Fig. 8 shows a phase diagram with movement directions 52 for a grid of states of unbalance. By choosing an optimized set of phase shifts 48, the balancing of the converter 10 may be forced into the direction 52, which may differ from the direction of natural balancing. In such a way, the converter 10 may reach the natural balancing region 44 faster than by natural balancing.

For example, the phase shifts 48 may be determined such that they minimize the following cost function:

$$J(\theta_0, \theta_1, \theta_2) = \mathbf{v}_d{}^T \left( A(\theta_0, \theta_1, \theta_2)\mathbf{v}_d + B(\theta_0, \theta_1, \theta_2)V_t \right), \qquad (19)$$

This has the effect that the phase shifts 48 are chosen as to move the state of unbalance $\mathbf{v}_d$ on the shortest possible route towards natural balancing region 44.

Alternatively, optimal phase shifts may be computed offline at a finite number, for example for points of a grid 54 in the forced balancing region 46. Online, the closest point of the grid 54 may be used for determining the phase shift 48.

The steps of the method may be repeated at discrete time intervals. Every time step, the state of unbalance $\mathbf{v}_d$ is in the region 46, the controller 12 shifts the carrier signal as indicated above. When the state of unbalance $\mathbf{v}_d$ is back in the natural balancing region 44, the regular carrier signals 40 are applied again.

Summarized, during the converter operation, the controller 12 monitors the state of unbalance $\mathbf{v}_d$. Accordingly, the controller 12 either computes the optimal phase shifts 48 at the current state of unbalance $\mathbf{v}_d$ or chooses the point closest to the current state of unbalance $\mathbf{v}_d$ and reads out the corresponding optimal phase shifts 48 from a lookup table. In either scenario, the optimal phase shifts 48 are identified and implemented.

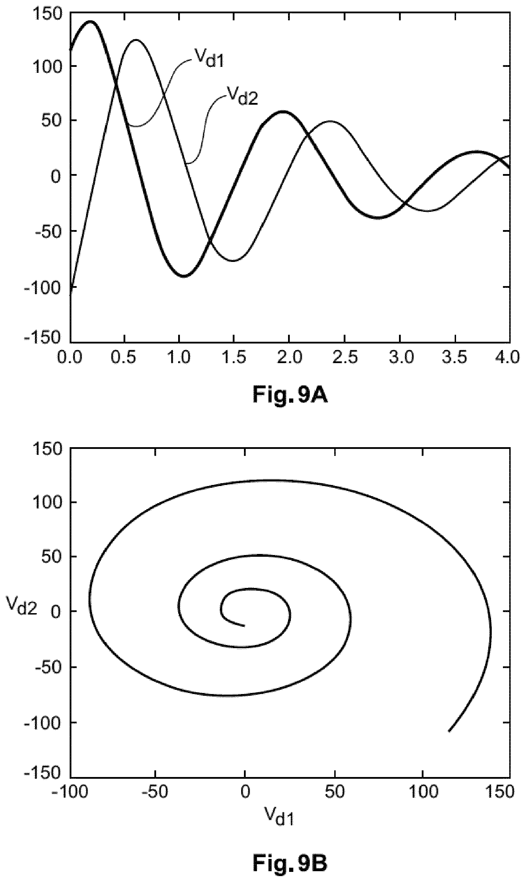

As an example, Fig. 9A and 9B show diagrams with the component voltages $v_{d1}$ and $v_{d2}$ of the state of unbalance $\mathbf{v}_d$ of a converter 10 with the circuit 12 of Fig. 4, when operated with regular pulse width modulation (i.e. without phase shifts). The parameters of the controller 10 are shown in the following table.

| Description | Symbol | Value |
|---|---|---|
| Cell capacitance | C | 1 mF |
| Switching frequency | $f_s$ | 1 000 Hz |
| Modulation frequency | fr | 50 Hz |
| Modulation index | $m_a$ | 0.9 |
| Load inductance | L | 8 mH |
| Load resistance | R | 4.9 $\Omega$ |
| DC bus voltage | $V_t$ | 800 V |

This converter 10 has a natural balancing time constant of about 2 s. The rebalancing result after an initial disturbance of $v_d = 80\left[\sqrt{2}, -\sqrt{2}\right]^T$ was applied is shown in Fig. 9A and 9B. Here the maximum time shown is 4 s.

Fig. 9A shows the balancing of over time. The behaviour of the balancing may be easier to view in a phase plane as shown in Fig. 9B. Here the time shown is 5 s and the final value of the difference state is $v_d = [0, -13]^T$. As may be seen from Fig. 9B, the natural balancing moves the state of unbalance $\mathbf{v}_d$ in a spiral around the natural balancing voltages (i.e. the origin).

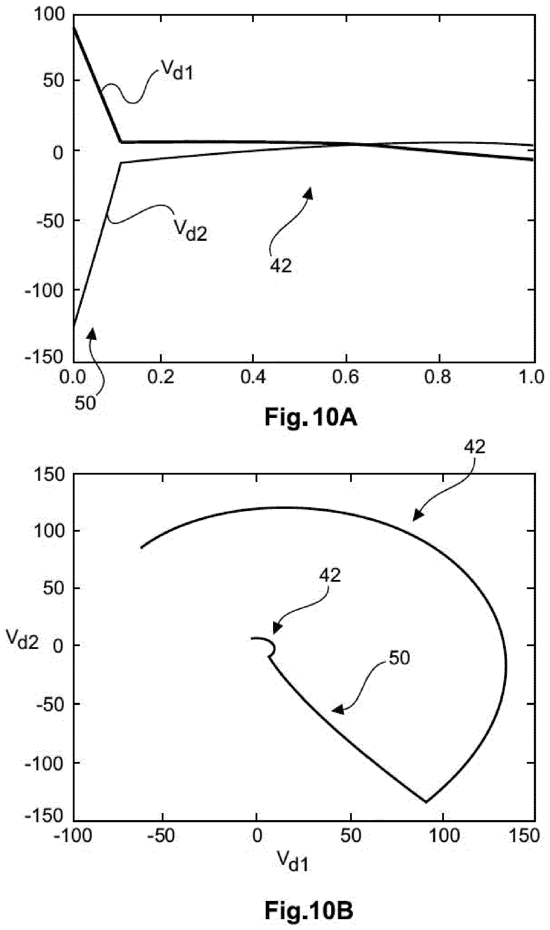

Fig. 10A and 10B show diagrams analogously to Fig. 9A and 9B but with forced balancing.

During a forced balancing phase 50, the set point for balancing was moved away from the natural balancing voltages by shifting he carrier signals 40, such that the state of unbalance $\mathbf{v}_d$ moves around another spiral around another set point, which in the case of Fig. 10B may be far away in the direction of the upper right corner.

In the shown example, the carrier signal 40 associated with $s_0$ was advanced by 150° and the carrier of $s_1$ delayed by 30° for a period of 0.11 s. After this time period, the carrier signals 40 are returned to their normal, regular positions. It is clear that the balancing is extremely quick. The balancing is also achieved without deformation of the output.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| 10 | electrical converter |
| 12 | converter circuit |
| 14 | controller |
| 16 | capacitor |
| 18 | semiconductor switches |
| 20 | converter input |
| 22 | converter output |
| 24 | DC link |
| 26 | connection point between switches |
| 28 | connection point between capacitors |
| 30 | converter cell |
| 32 | load |
| 34 | switching signal |
| 36 | switching instant |
| 38 | reference voltage signal |
| 40 | carrier signal |
| 42 | normal operation phase |
| 44 | natural balancing region |
| 46 | forced balancing region |
| 48 | phase shift |
| 50 | forced balancing phase |
| 52 | movement direction |
| 54 | grid |

**Claims**

1. A method for controlling an electrical converter (10) having a balancing property such that a capacitor voltage of a capacitor (16) of the electrical converter tends towards a balancing voltage, the method comprising:

generating switching signals for the electrical converter (10) based on pulse width modulation, wherein switching instants (36) are determined by comparing a reference voltage signal (38) with a carrier signal (40);
determining a state of unbalance of at least one capacitor (16) of the electrical converter, the state of unbalance ($v_d$) being based on a difference between an actual capacitor voltage and a desired reference voltage;
determining, whether the state of unbalance ($v_d$) is outside a natural balancing region (44);
in the case, the state of unbalance ($v_d$) is outside the natural balancing region (44), phase shifting of a regular carrier signal (40), such that the capacitor voltage of the capacitor tends more directly in the direction of the natural balancing region (44) than during pulse width modulation with the regular carrier signal (40),
wherein the phase shift (48) for the phase shifting of the regular carrier signal (40) is determined by minimizing a cost function based on the state of unbalance ($v_d$) and/or a DC link voltage of the electrical converter (10).

2. The method of claim 1,
wherein a phase shift (48) is calculated online.

**3.** The method of claim 1,
wherein a phase shift (48) is determined from a table of offline calculated phase shifts.

**4.** The method of claim 3,
wherein a region (46) outside the natural balancing region (44) is portioned into a grid (54) associated with offline calculated phase shifts.

**5.** The method of one of the preceding claims,
wherein the electrical converter (10) comprises at least two capacitors (16);
wherein a state of unbalance($v_d$) is determined, which is based on at least two voltages of the at least two capacitors.

**6.** The method of one of the preceding claims,
wherein the balancing voltage is smaller than a DC link voltage of the electrical converter.

**7.** The method of one of the preceding claims,
wherein switching instants (36) are determined by comparing a reference voltage signal (48) with at least two carrier signals (40) for at least two converter cells (30).

**8.** The method of claim 7,
wherein regular carrier signals (40) are equally spaced from each other.

**9.** A computer program, which, when being executed on a processor, is adapted for executing the steps of the method of one of claims 1 to 8.

**10.** A computer-readable medium on which a computer program according to claim 9 is stored.

**11.** A controller (14) for controlling an electrical converter (10) adapted for executing the steps of the method of one of claims 1 to 8.

**12.** An electrical converter (10), comprising:

a plurality of semiconductor switches (18);
at least one capacitor (16);
a controller (14) according to claim 11 adapted for controlling the semiconductor switches;
wherein the electrical converter (10) has a balancing property such that a capacitor voltage of the capacitor (16) of the electrical converters tends towards a balancing voltage, when the semiconductor switches (18) are switched based on a regular pulse width modulation scheme,

**13.** The electrical converter (10) of claim 12,
wherein the capacitor (16) is connected to a connection point (26) between two series connected semiconductor switches (18).

## Patentansprüche

**1.** Verfahren zum Steuern eines elektrischen Umrichters (10), der eine Ausgleichseigenschaft besitzt, derart, dass eine Kondensatorspannung eines Kondensators (16) des elektrischen Umrichters zu einer Ausgleichsspannung tendiert, wobei das Verfahren Folgende umfasst:

Erzeugen von Schaltsignalen für den elektrischen Umrichter (10) auf der Grundlage einer Pulsweitenmodulation, wobei Schaltzeitpunkte (36) durch Vergleichen eines Referenzspannungssignals (38) mit einem Trägersignal (40) bestimmt werden;
Bestimmen eines Ungleichgewichtszustands von mindestens einem Kondensator (16) des elektrischen Umrichters, wobei der Ungleichgewichtszustand ($v_d$) auf einer Differenz zwischen einer tatsächlichen Kondensatorspannung und einer gewünschten Referenzspannung basiert;
Bestimmen, ob der Ungleichgewichtszustand ($v_d$) außerhalb eines natürlichen Ausgleichsbereichs (44) liegt;
falls der Ungleichgewichtszustand ($v_d$) außerhalb des natürlichen Ausgleichsbereichs (44) liegt, Verschieben der Phase eines normalen Trägersignals (40) derart, dass die Kondensatorspannung des Kondensators direkter als während einer Pulsweitenmodulation mit dem normalen Trägersignal (40) in Richtung des natürlichen Ausgleichsbereichs (44) tendiert,

wobei die Phasenverschiebung (48) für das Verschieben der Phase des normalen Trägersignals (40) durch Minimieren einer Kostenfunktion auf der Grundlage des Ungleichgewichtszustands ($v_d$) und/oder einer Gleichstromverbindungsspannung des elektrischen Umrichters (10) bestimmt wird.

2.  Verfahren nach Anspruch 1,
    wobei eine Phasenverschiebung (48) online berechnet wird.

3.  Verfahren nach Anspruch 1,
    wobei eine Phasenverschiebung (48) aus einer Tabelle offline berechneter Phasenverschiebungen bestimmt wird.

4.  Verfahren nach Anspruch 3,
    wobei ein Bereich (46) außerhalb des natürlichen Ausgleichsbereichs (44) in ein Gitter (54), das offline berechneten Phasenverschiebungen zugeordnet ist, aufgeteilt wird.

5.  Verfahren nach einem der vorhergehenden Ansprüche, wobei
    der elektrische Umrichter (10) mindestens zwei Kondensatoren (16) umfasst; und
    ein Ungleichgewichtszustand ($v_d$), der auf mindestens zwei Spannungen der mindestens zwei Kondensatoren basiert, bestimmt wird.

6.  Verfahren nach einem der vorhergehenden Ansprüche,
    wobei die Ausgleichsspannung kleiner als eine Gleichstromverbindungsspannung des elektrischen Umrichters ist.

7.  Verfahren nach einem der vorhergehenden Ansprüche,
    wobei Schaltzeitpunkte (36) durch Vergleichen eines Referenzspannungssignals (48) mit mindestens zwei Trägersignalen (40) für mindestens zwei Umrichterzellen (30) bestimmt werden.

8.  Verfahren nach Anspruch 7,
    wobei normale Trägersignale (40) voneinander gleich beabstandet sind.

9.  Computerprogramm, das dann, wenn es auf einem Prozessor ausgeführt wird, ausgelegt ist, die Schritte des Verfahrens nach einem der Ansprüche 1 bis 8 auszuführen.

10. Computerlesbares Medium, auf dem ein Computerprogramm nach Anspruch 9 gespeichert ist.

11. Steuereinheit (14) zum Steuern eines elektrischen Umrichters (10), die ausgelegt ist, die Schritte des Verfahrens nach einem der Ansprüche 1 bis 8 auszuführen.

12. Elektrischer Umrichter (10), der Folgendes umfasst:

    mehrere Halbleiterschalter (18);
    mindestens einen Kondensator (16);
    eine Steuereinheit (14) nach Anspruch 11, die zum Steuern der Halbleiterschalter ausgelegt ist;
    wobei der elektrische Umrichter (10) eine Ausgleichseigenschaft besitzt, derart, dass eine Kondensatorspannung des Kondensators (16) des elektrischen Umrichters in Richtung einer Ausgleichsspannung tendiert, wenn die Halbleiterschalter (18) auf der Grundlage eines normalen Pulsweitenmodulationsschemas umgeschaltet werden.

13. Elektrischer Umrichter (10) nach Anspruch 12,
    wobei der Kondensator (16) mit einem Verbindungspunkt (26) zwischen zwei in Reihe geschalteten Halbleiterschaltern (18) verbunden ist.

**Revendications**

1.  Procédé de commande d'un convertisseur électrique (10) possédant une propriété d'équilibrage telle que la tension aux bornes d'un condensateur (16) du convertisseur électrique tend vers une tension d'équilibrage, le procédé comprenant :

la génération de signaux de commutation pour le convertisseur électrique (10) sur la base d'une modulation de largeur d'impulsion, les instants de basculement (36) étant déterminés en comparant un signal de tension de référence (38) à un signal porteur (40),

la détermination de l'état de déséquilibre d'au moins un condensateur (16) du convertisseur électrique, l'état de déséquilibre ($v_d$) étant fondé sur la différence existant entre la tension réelle de condensateur et une tension de référence souhaitée,

la détermination de ce que l'état de déséquilibre ($v_d$) se trouve à l'extérieur d'une zone naturelle d'équilibrage (44),

un déphasage d'un signal porteur régulier (40), dans le cas où l'état de déséquilibre ($v_d$) se trouve à l'extérieur de la zone naturelle d'équilibrage (44), de sorte à ce que la tension aux bornes du condensateur tende plus directement dans la direction de la zone naturelle d'équilibrage (44) que pendant une modulation de largeur d'impulsion avec le signal porteur régulier (40),

dans lequel le déphasage (48) destiné à déphaser le signal porteur régulier (40) est déterminé en minimisant une fonction de coût fondée sur l'état de déséquilibre ($v_d$) et/ou sur la tension de liaison continue du convertisseur électrique (10).

2. Procédé selon la revendication 1,
dans lequel le déphasage (48) est calculé en ligne.

3. Procédé selon la revendication 1,
dans lequel le déphasage (48) est déterminé à partir d'une table constituée de déphasages calculés hors ligne.

4. Procédé selon la revendication 3,
dans lequel la zone (46) en dehors de la zone naturelle d'équilibrage (44) est fractionnée en une grille (54) associée aux déphasages calculés hors ligne.

5. Procédé selon l'une des revendications précédentes, dans lequel le convertisseur électrique (10) comprend au moins deux condensateurs (16),
dans lequel l'état de déséquilibre ($v_d$) est déterminé, lequel est fondé sur au moins deux tensions des deux condensateurs ou plus.

6. Procédé selon l'une des revendications précédentes, dans lequel la tension d'équilibrage est plus petite que la tension de liaison continue du convertisseur électrique.

7. Procédé selon l'une des revendications précédentes, dans lequel les instants de commutation (36) sont déterminés en comparant un signal de tension de référence (48) à au moins deux signaux porteurs (40) pour au moins deux cellules de convertisseur (30).

8. Procédé selon la revendication 7,
dans lequel les signaux porteurs réguliers (40) sont également espacés l'un de l'autre.

9. Programme informatique qui, lorsqu'il est exécuté sur un processeur, est conçu pour exécuter les étapes du procédé conformément à l'une des revendications 1 à 8.

10. Support pouvant être lu par ordinateur sur lequel est stocké un programme informatique conforme à la revendication 9.

11. Contrôleur (14) destiné à commander un convertisseur électrique (10) conçu pour exécuter les étapes du procédé conformément à l'une des revendications 1 à 8.

12. Convertisseur électrique (10) comprenant :

une pluralité d'interrupteurs à semi-conducteur (18),
au moins un condensateur (16),
un contrôleur (14) conforme à la revendication 11, conçu pour commander les interrupteurs à semi-conducteur,
le convertisseur électrique (10) présentant une propriété d'équilibrage telle que la tension aux bornes du condensateur (16) des convertisseurs électriques tend vers une tension d'équilibre lorsque les interrupteurs à semi-conducteur (18) sont commutés sur la base d'un principe de modulation de largeur d'impulsion régulière.

13. Convertisseur électrique (10) selon la revendication 12,
dans lequel le condensateur (16) est relié à un point de connexion (26) situé entre deux interrupteurs à semi-conducteur (18) reliés en série.

**Fig. 1**

**Fig. 2**

Fig. 3

Fig. 4

**Fig. 5**

**Fig. 6**

Fig. 7

Fig. 8

**Fig. 9A**

**Fig. 9B**

Fig.10A

Fig.10B

**EP 3 080 904 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011110472 A1